# EUROPEAN PATENT SPECIFICATION

(11) **EP 3 803 137 B1**
(45) Date of publication and mention of the grant of the patent: **12.02.2025**
(21) Application number: 19815026.0
(22) Date of filing: 04.06.2019
(51) Int. Cl.: F16B 7/00, B21D 35/00, B21D 39/04, B21D 41/02, C21D 9/00, F16B 7/04, B21D 39/03

(54) **MECHANICAL JOINING OF NITINOL TUBES**
MECHANISCHES VERBINDEN VON NITINOLRÖHREN
ASSEMBLAGE MÉCANIQUE DE TUBES EN NITINOL

(30) Priority: 05.06.2018 US 201862680902 P; 17.12.2018 US 201816222312
(43) Date of publication of application: 14.04.2021
(73) Proprietor: Viant AS&O Holdings, LLC, Tempe, Arizona 85282 (US)
(72) Inventor: BROADLEY, Mark, Downingtown, Pennsylvania 19335 (US); WOOD, Michael D., Landsdale, Pennsylvania 19446 (US); COONEY, Jim, Gilbertsville, Pennsylvania 19525 (US); HOKLAS, Timothy, Crystal Lake, Illinois 60012 (US)
(74) Representative: Lucke, Andreas
(86) International application number: PCT/US2019/035333
(87) International publication number: WO 2019/236543

(56) References cited:
- EP-A1- 0 115 662
- EP-A1- 2 392 430
- US-A1- 2005 043 711
- US-A1- 2010 023 010
- US-A1- 2012 143 175
- US-A1- 2018 093 070
- US-B1- 6 352 385
- MELTON ET AL.: "A New Wide Hysteresis NiTi Based Shape Memory Alloy and its Applications", THE JAPAN INSTITUTE OF METALS, 1 January 1986 (1986-01-01), pages 1053 - 1058, XP055660275

## Description

### Field Of The Invention

The present invention relates to mechanical joining of Nickel Titanium tubes, also known as Nitinol, to other tubular components. Such mechanical joining may be achieved using Nitinol's superelastic behavior by interpenetration of lobe features between the respective tubes which may be achieved by translating the tubes together on a longitudinal axis, a transverse axis, by a combination of translation and rotational motion or by a hinging motion. Mechanical joining may also be achieved using Nitinol's shape memory behavior by cooling the Nitinol tube, deforming the lobe features, positioning the lobe features in the desired penetrated position then heating the Nitinol so it returns to its original shape to achieve an interpenetrated joint.

### Background

Nitinol is an alloy of approximately 50% Nickel and 50% Titanium. The difference of electronegativity between the two elements (Ni = 1.9 and Ti = 1.54 Pauling electronegativity) is large enough that they violate the Hume Rothery solubility criteria and combine when melted and cooled to room temperature as a NiTi body centered cubic intermetallic compound in which every nickel atom is surrounded by a titanium atom and vice versa. This gives the material unusual mechanical behaviors, including what is referred to as superelasticity. Such superelasticity is a pseudoelastic response to an applied stress caused by a phase transformation between the austenitic and martensitic phases of a crystal. The material composition makes welding of nitinol to other engineering materials problematic, since either the Nickel or the Titanium will form brittle intermetallic compounds with many other metals and their alloys, including stainless steels.

On some device designs, nitinol tubing is required to provide flexibility at a specific location along a long drive tube. Since nitinol is relatively expensive, it is logical to use the nitinol only where it is needed for flexibility and join it to a relatively lower cost tube, like stainless steel, that would provide most of the remaining length of the drive tube. Historically this has been accomplished by welding the tube ends together.

One successful welding method for joining Nitinol to stainless steel involves welding the Nitinol component to an intermediate component made of Nickel, Cobalt or Tantalum and their alloys which are compatible with both metals. This approach involves the additional cost of the intermediate metal component as well as the cost of welding. For relatively simple product forms like wire, this may be a cost effective approach. For more complex product forms like tubing, the cost and lead time for the intermediate metal component, as well as the more complex tube welding methods, make this approach less attractive.

Accordingly, a need remains for a method of joining Nitinol tubing to other tubular structures, made of materials other than Nitinol, that would avoid welding procedures and the need for an intermediate metal component, and other associated problems.

US 2018/093070 A1 discloses a method for joining a Nitinol tube and a corresponding non-Nitinol tube according to the preamble of claim 1.

### Summary

A method of forming a mechanical joint between a Nitinol tube and a corresponding tubular component of a metallic material other than Nitinol is disclosed in appended claim 1.

### Brief Description Of The Drawings

The objects, features and advantages of the present invention will be apparent from the following detailed descriptions of the preferred aspects of the invention in conjunction with reference to the following drawings, where:
**FIG. 1** illustrates an exemplary lobe structure in accordance with the present invention.
**FIG. 2** illustrates a Nitinol tube and corresponding metal tube as they are configured for mechanical engagement.
**FIG. 3** illustrates a Nitinol tube engage with a corresponding metal tube and the formation of a mechanical joint between such tubing.
**FIG. 4** illustrates a lobe geometry that is engaged by an initial axial movement followed by a rotational or twist motion.
**FIG. 5** illustrates a further preferred geometry for the lobes disclosed herein for placement on Nitinol tubing.
**FIG. 6** illustrates engagement of the lobes illustrated 5 in **FIG. 5****.**
**FIG. 7** illustrates the formation of a mechanical joint between the lobes illustrated in **FIG. 5****.**

### Detailed Description

The present invention provides a structure and associated method for the mechanical joining of Nitinol tubing to other metallic tubular components. Reference to Nitinol herein should be understood as a metal alloy containing Nickel and Titanium in approximately equal amounts. The other tubular components that may be utilized herein include, but are not limited to any metallic based tubing, and in particular metal tubing that does not utilize Nitinol. Accordingly, such metallic based tubing may include stainless steel, such as 304 and 316 stainless steel, precipitation hardenable (PH) stainless steel such as 17-7 PH^{™}, cobalt alloys such as MP35N, and nickel alloys such as InconelTM 600, 625 and 718.

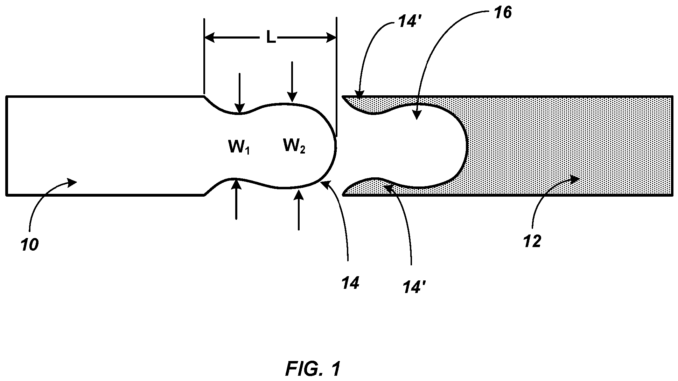

The tubular components herein are provided with a plurality of lobe features extending from the end of the tubes. With reference to **FIG. 1****,** a side view of a Nitinol tube **10** and a corresponding metallic tubular component **12** is identified. As can be seen, at one end of Nitinol tube **10** is a protruding lobe feature **14** and on the metallic tubular component **12** there are corresponding lobe features **14'** defining a recess or opening **16.** While one lobe feature is illustrated in **FIG. 1****,** it should be appreciated herein that there are a plurality of such lobe features the end of the tubes **10** and **12,** which are complimentary to one another, and the single lobe feature is illustrated to facilitate description of the invention. Reference to the feature that the lobe **14** on tube **10** are complimentary to lobe **14'** on tube **12** is reference to the feature that such lobes have a size and geometry that allows for the lobes to join together and provide mechanical engagement with the formation of a mechanical joint, as described further herein.

A lobe herein may therefore be understood as a protruding feature of varying geometry that extends from one end of the tube. Accordingly, as seen in **FIG. 1****,** the lobe **14** extends from the tube **10** and may taper to an initial minimum width **W₁** and a length **L.** The minimum width **W₁** then expands to a second and greater width **W₂**. Again, it should be understood that there are a plurality of such lobes present, and complimentary lobes of similar geometry and size on tube **12.**

The tubing herein with the now identified lobe features is tubing that may be preferably utilized in a variety of medical device applications. Accordingly, the outer diameters (OD) of the tubing that may be joined herein preferably ranges from 0.254 mm (0.010 inch) OD to 15.875 mm (0.625 inch) OD. Wall thickness preferably ranges from 0.0508 mm (0.002 inch) to 1.651 mm (0.065 inch). In addition, the OD to wall thickness ratio preferably falls in the range of 5:1 to 30:1.

While **FIG. 1** therefore illustrates one exemplary lobe, thereby not falling under the scope of the claims, it should now be appreciated that the Nitinol tube **10** and corresponding metallic tubular component **12** will have a plurality of lobe features, which preferably provides 2, 3, 4, 5, or 6 lobes. Each lobe will preferably have a lobe length (**L**) to width (**W₁**) aspect ratio from 0.33:1 to 10:1. See again, **FIG. 1** for the location of length (**L**) and width (**W₁**). More preferably, the number of lobes is 2-3 and the lobe length to width aspect ratio is 2:1 to 5:1. In addition, one may preferably utilize lobes that have a length to width aspect ratio from 0.33:1 to 2:1. The lobes in the Nitinol tubing are preferably laser cut to such preferred dimensions and any dross formation is removed from the cut tube. However, in the broad context of the present disclosure, the lobes herein may be formed utilizing electrical discharge maching (EDM), computer numerical controlled (CNC) milling, abrasive water jet cutting or abrasive wire cutting.

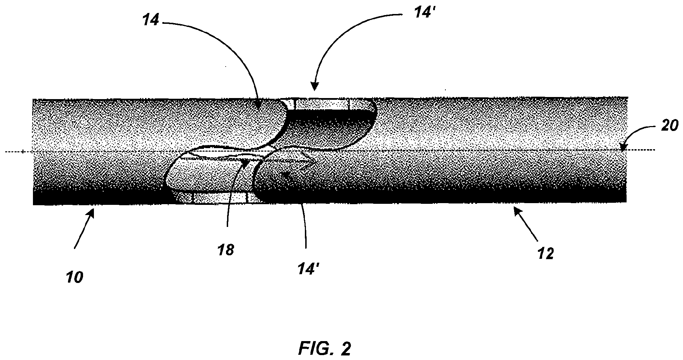

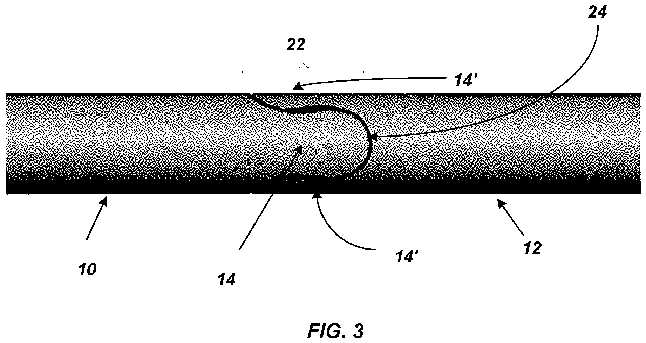

Attention is next directed to **FIG. 2** which illustrates Nitinol tube **10** and corresponding metal tube **12** translating toward one another via arrow **18** in an axial direction along a common longitudinal axis (see dotted line **20**). The two lobes **14** on the Nitinol tube **10** are held opened so that the tube ID at the lobe apex is larger than the OD of the original tube. The right tube **12** is then moved toward the left Nitinol tube **10** along the common axis **20** until the two right tube lobe apexes align with the two corresponding left piece lobes **14.** The tubes **10** and **12** are then moved together until the complimentary lobes **14** and **14'** are aligned. At this point the lobes **14** are released from their open position allowing them to move inwardly to their original position. This results in what may described as a snap fit which then serves to lock the lobes **14** and **14'** together. See **FIG. 3****.** As Nitinol can provide up to 8.0% strain, it is contemplated that the amount of strain on the Nitinol lobes **14** that occurs when held open is greater than 1.0 % up to 8.0%, and more preferably may fall in the range of greater than 1.0% to 6.0%. The strain herein is reference to the increase in length of the lobe inner stretched surface or the reduction in length of the outer compressed surface when the lobe is held open, as noted above.

With reference to **FIG. 3****,** it should be appreciated the mechanical engagement that is achieved herein by the interlocking lobes **14** and **14'** is such that one may provide a mechanical joint **22** with different and targeted mechanical engagement characteristics. As illustrated, the mechanical joint is one that has a joint length that corresponds to the length L of the identified lobe. More specifically, as illustrated in **FIG. 3****,** one may provide for a relatively small gap **24** to occur as between lobe **14** and tube **12,** when in the mechanically engaged position. Such gap therefore will provide for some limited amount of motion as between the Nitinol tube **10** and the corresponding tubular component **12.** It is contemplated that such a gap can provide for a mechanical joint with torsional flexibility (rotational freedom) of 1.0 degree to 3.0 degrees. However, it can be appreciated that when there is a flush and contacting fit between lobes **14** and **14'**, there would be less than 1.0 degree of rotational freedom, or more preferably in the range of 0.1 degree up to less than 1.0 degree of such freedom.

Furthermore, with respect to what may be understood as the pull apart strength of the joints made herein with the plurality of lobe configurations, such as joint **22** in **FIG. 3****,** it is contemplated that such pull apart strength will be up to one-half of the yield strength (**YS**) of the tube made of the relatively weaker material. It should be noted that the tube with the weakest cross-sectional strength will ultimately limit the maximum tensile load that the joint can sustain. The pull apart strength would be measured by applying a load along the tube longitudinal axis (see, e.g., **20** in **FIG. 2**) until the joint is deformed and separates or the tube material at the joint breaks.

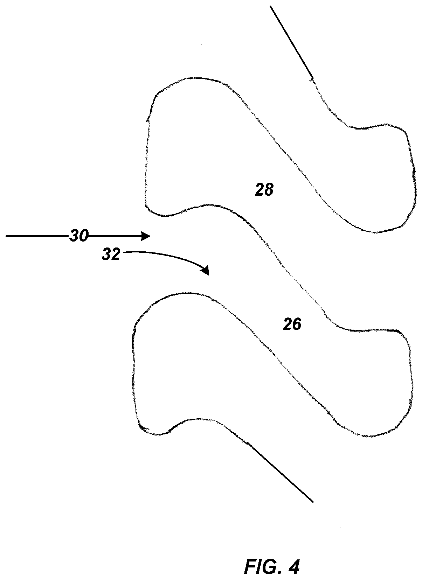

While the above describes the use of translating axial joining of Nitinol tube **10** and corresponding tube **12,** i.e. with reference again to **FIG. 2****,** movement of the tube **10** and **12** along common longitudinal axis **20,** the present invention also contemplates the use of a lobe geometry that would utilize such axial movement along with a rotational or twist motion. More specifically, with reference to **FIG. 4****,** lobes **26** and **28,** which may be understood as extending from the end of two tube sections, one being Nitinol, are shown in their engaged and interlocked position. It may therefore be appreciated that such lobe geometry **26** is preferably engaged via an initial axial movement (see arrow **30**) followed by a rotational or twist motion (see arrow **32**) of the respective tube portions that are to be mechanically joined together. This design allows the use of higher aspect ratio lobes without increasing the overall joint length. This in turn reduces the strain required of the Nitinol lobe during snap assembly.

It should therefore now be appreciated that the mechanical joining herein can be achieved by a variety of assembly techniques. As noted, mechanical engagement or formation of the mechanical joint can be achieved by translating the tubes together on a longitudinal axis. In addition, it should be appreciated that the tubes may be joined together by movement on an axis that is transverse to the longitudinal axis. In addition, the tubes may also be joined together by a hinging type motion (i.e. the tubes are initially connected and then moved towards one another about a rotational axis). With respect to the use of a hinging motion, such would apply where there is an odd number of lobes on each tube and wherein, e.g., one lobe on the Nitinol tube is inserted at an angle into a corresponding recess on the metallic tube. Once inserted, the remaining lobes are then moved together by a hinging motion until all of the lobes have engaged into their corresponding recess locations.

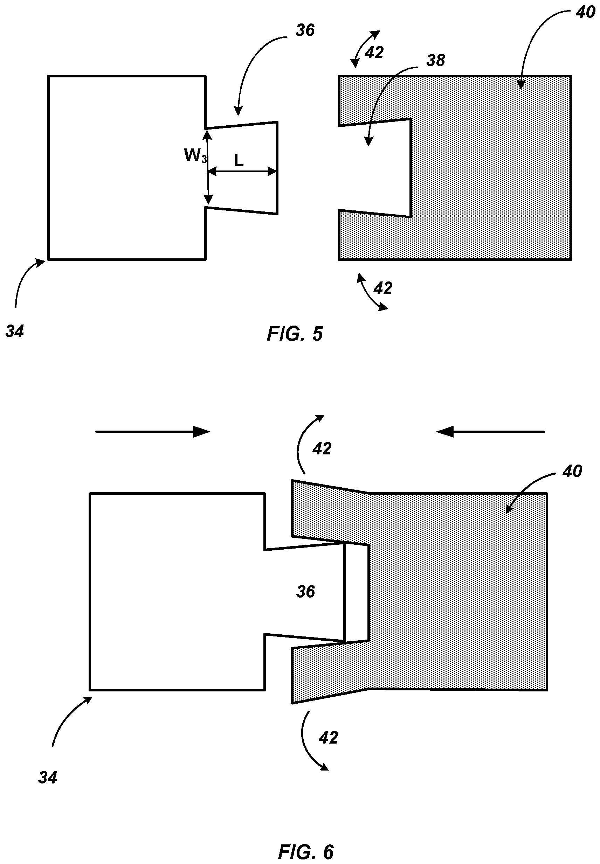

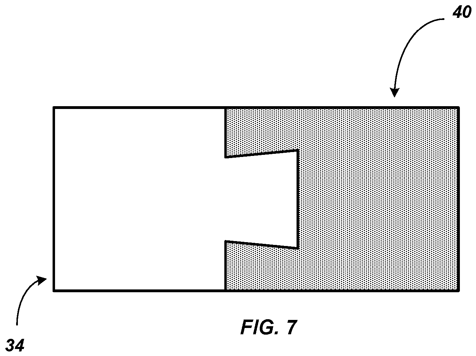

Reference is next directed to **FIG. 5****,** which illustrates a further preferred geometry and size for the lobes herein. As illustrated, the end portion of tube **34** contains a plurality of lobes **36** which have a width **W₃** at the end of the tube and a length **L** from the end of the tube, such that they define a relatively low length to width ratio. The end portion of tube **40** contains a corresponding plurality of lobes with the same lobe geometry and accordingly, a mating recess portion **38** for lobe **36.** Preferably, such relatively low length (**L**) to width (**W₃**) aspect ratio is in the range of 0.33:1 to 2:1. As can also be seen, such lobes may have a geometry that may be described as an isosceles trapezoidal configuration, where the sides forming the protruding lobes are equal in length. In this particular embodiment, it can again be appreciated that tube **40,** made of Nitinol, with its corresponding lobe geometry, is such that the lobes defining recess **38** may be again be held open (see arrows **42**) so that the lobe **36** may be inserted into recess **38** while tubes **34** and **40** move towards one another until the lobes on tube **40** are released and snap inward to their original position. See **FIGS. 6** and **7**.

It should be noted that the holding open of the Nitinol lobes described in the various assembly procedures may be performed as a separate step prior to the assembly of the two tubes, or may be performed as a part of the assembly through the use of guiding assembly fixtures or by creating guiding features on the corresponding lobe geometries.

It can now be appreciated that there are a number of benefits and advantages to the present invention. Among other things, the formation and use of the aforementioned lobes and the formation of the mechanical joint as between Nitinol and another tubular component is such that welding is avoided. In addition, the use of an intermediate tubular component made of compatible alloys is also not required. Furthermore, the joint formed here is such that it can be understood as a joint that is self-aligning upon assembly. No sheath or internal alignment wire is required for assembly or in service.

Furthermore, the mechanical joining herein makes effective use of the superelasticity of Nitinol and forms a joint with the same OD and ID size as the Nitinol tube. As noted above, the mechanical joining may rely upon axial engagement, movement on an axis that is transverse to the longitudinal axis, by axial engagement with rotation or twisting of the tubular components or by a hinging motion. The superelastic recovery of the Nitinol provides formation of the identified joint where the Nitinol is initially deformed and then permitted to recover to its original shape. As Nitinol tubing is used in a variety of medical devices (e.g. flexible drives, catheters, stent delivery systems and elastic needles), the present invention provides a more practical approach to join Nitinol tubing to other metallic tubing.

In addition to the above, and considering again FIGS. 1 and 2, the Nitinol tube 10 and the corresponding lobes 14 can be selected from a superelastic Nitinol alloy that provides the shape-memory alloy effect under desirable processing temperature conditions. Accordingly, the Nitinol tube 10 and lobes 14 herein can be cooled to a relatively low temperature so that the Nitinol alloy itself becomes martensitic. Such temperature may preferably be at or below - 30 °C, more preferably in the range of -50 °C to -30 °C. This temperature range is contemplated to provide for the preferred Nitinol alloy the temperature where the alloy, as noted, will transform to the martensite structure. When in this state, the lobes 14 can be deformed by expanding the lobes outwardly, e.g., over a conical mandrel. In effect, this then will increase the outer diameter of the tube 10 at the lobe location. The expanded lobes 14 can then be aligned and placed over the openings 16 in the metallic tubular component 12. Upon application of heat, the expanded lobes 14 will return to their room temperature shape by the shape memory effect, where the Nitinol undergoes a change in crystal structure and reverts to austenite and recovers it previous shape. As a consequence, the Nitinol lobes can engage and again form a mechanical joint as generally shown in FIG. 3. Such heating may preferably be at a temperature of greater than or equal to 0 °C, more preferably in the range of 0 °C to 42 °C. As noted, for the selected Nitinol alloy, such temperatures will now conveniently transform the alloy to the austenite structure.

It should also be mentioned that the above described deformation of the lobes illustrated in FIGS. 1 and 3 utilizing the shape-memory effect of the Nitinol alloy can similarly be applied to the lobes shown on Nitinol tube 40 illustrated in FIG. 5. More specifically, upon cooling as noted above, the lobes on Nitinol tube 40 may be deformed outwardly prior to insertion of the metallic tube 34. Such outward deformation is shown generally by arrow 42 in FIG. 5. Then, after insertion of lobe 36 into mating recess portion 38 on the Nitinol tube 40, the Nitinol lobes may be heated as noted above and return to their original shape and mechanically engage tube 34 as shown generally in FIG. 7.

Accordingly, one may provide a first Nitinol tube where the tube includes an end portion and a plurality of first protruding lobes in a first position extending from the end portion, wherein the lobes have a two-way shape memory capability and the lobes are cooled and undergo a martensitic phase change where the cooled lobes are then expanded outward from their first position to an expanded second position. A second tubular metallic component is provided having an end portion and a plurality of second protruding lobes extending from said second tube end portion, including openings configured to engage with said expanded lobes on the Nitinol tube. The Nitinol tubes with the expanded lobes are then positioned such that the lobes align with the openings in the second tubular metallic component. The expanded Nitinol lobes are then heated and return to their first position and mechanically engage with the second tubular metallic component.

## Claims

1. A method of forming a mechanical joint between a Nitinol tube and a corresponding tubular component of a metallic material other than Nitinol comprising:
providing a first Nitinol tube (10) wherein said tube includes a first end portion and a plurality of first protruding lobes (14) extending from said first end portion;
providing a second tubular component (12) of a metallic material other than Nitinol having a second end portion and a plurality of second protruding lobes (14') extending from said second end portion, wherein said second protruding lobes (14') are complimentary in size and geometry with the first protruding lobes (14);
mechanically engaging said first end portion having said first plurality of lobes (14) with said second end portion having said second plurality of lobes (14') wherein said lobes engage and form a mechanical joint;
wherein said plurality of lobes (14) are in a first position on said first Nitinol tube (10) **characterised in that**, said Nitinol lobes are cooled and said cooled lobes are expanded to a second position and said expanded lobes are aligned with said end portion of said second tubular component (12) and said expanded lobes are then heated and return to said first position and form said mechanical joint.

2. The method of claim 1 wherein said plurality of lobes (14) extending from said first end portion on said Nitinol tube (10) comprise an initial minimum width W1 and a length L, wherein the length to width aspect ratio of 0 33:1 to 10:1.

3. The method of claim 1 wherein the plurality of lobes (14) extending form said end portion on said Nitinol tube (10) comprises 2, 3, 4, 5 or 6 lobes.

4. The method of claim 1 wherein said Nitinol tube (10) has an outer diameter (OD) of 0.254 mm to 15.875 mm.

5. rhe method of claim 1 wherein said Nitinol tube (10) has a wall thickness of 0.051 mm to 1.651 mm.

6. The method of claim 1 wherein the outer diameter (OD) to wall thickness ratio is 5:1 to 30:1.

7. The method of claim 1 wherein said lobe has a length L and a width at the end of the tube (W3) such that the length (L) to width (Ws) ratio is in the range of 0.33:1 to 2:1.

8. The method of claim 1 wherein said mechanical engagement of said first Nitinol tube (10) end portion with said second metallic tubular component includes a strain on said Nitinol lobes of greater than 1.0% up to 8.0%.

9. The method of claim 1 wherein said mechanical joint comprises a gap (24) between the plurality of lobes (14) and the second tubular component (12), thereby achieving a torsional flexibility of .1 degree up to less than 1.0 degree.

10. The method of claim 1 wherein said mechanical joint comprises a gap (24) between the plurality of lobes (14) and the second tubular component (12), thereby achieving a torsional flexibility of 1.0 degree to 3.0 degrees.

## Patentansprüche

1. Verfahren zum Bilden einer mechanischen Verbindung zwischen einem Nitinolrohr und einer entsprechenden rohrförmigen Komponente aus einem metallischen Material, das anders als Nitinol ist, umfassend:
Bereitstellen eines ersten Nitinolrohrs (10), wobei das Nitinolrohr einen ersten Endabschnitt und eine Vielzahl von ersten vorstehenden Ausbuchtungen (14) aufweist, die sich von dem ersten Endabschnitt erstrecken;
Bereitstellen einer zweiten rohrförmigen Komponente (12) aus einem metallischen Material, das anders als Nitinol ist, die einen zweiten Endabschnitt und eine Vielzahl von zweiten vorstehenden Ausbuchtungen (14') aufweist, die sich von dem zweiten Endabschnitt erstrecken, wobei die zweiten vorstehenden Ausbuchtungen (14') in Größe und Geometrie komplementär zu den ersten vorstehenden Ausbuchtungen (14) sind;
mechanisches Ineingriffbringen des ersten Endabschnitts, der die erste Vielzahl von Ausbuchtungen (14) aufweist, mit dem zweiten Endabschnitt, der die zweite Vielzahl von Ausbuchtungen (14') aufweist, wodurch die Ausbuchtungen in Eingriff kommen und eine mechanische Verbindung bilden;
wobei sich die Vielzahl von Ausbuchtungen (14) in einer ersten Position auf dem ersten Nitinolrohr (10) befinden, **dadurch gekennzeichnet, dass** die Ausbuchtungen aus Nitinol gekühlt werden und die gekühlten Ausbuchtungen in eine zweite Position expandiert werden und die expandierten Ausbuchtungen mit dem Endabschnitt der zweiten rohrförmigen Komponente (12) ausgerichtet werden und die expandierten Ausbuchtungen dann erwärmt werden und in die erste Position zurückkehren und die mechanische Verbindung bilden.

2. Verfahren nach Anspruch 1, wobei die Vielzahl von Ausbuchtungen (14), die sich von dem ersten Endabschnitt auf dem Nitinolrohr (10) erstrecken, eine anfängliche Mindestbreite W1 und eine Länge L umfassen, wobei das Längenverhältnis von Länge zu Breite von 0,33:1 bis 10:1 beträgt.

3. Verfahren nach Anspruch 1, wobei die Vielzahl von Ausbuchtungen (14), die sich von dem Endabschnitt auf dem Nitinolrohr (10) erstrecken, 2, 3, 4, 5 oder 6 Ausbuchtungen umfasst.

4. Verfahren nach Anspruch 1, wobei das Nitinolrohr (10) einen Außendurchmesser (OD) von 0,254 mm bis 15,875 mm aufweist.

5. Verfahren nach Anspruch 1, wobei das Nitinolrohr (10) eine Wanddicke von 0,051 mm bis 1,651 mm aufweist.

6. Verfahren nach Anspruch 1, wobei das Verhältnis von Außendurchmesser (OD) zu Wanddicke 5:1 bis 30:1 beträgt.

7. Verfahren nach Anspruch 1, wobei die Ausbuchtung eine Länge L und eine Breite am Ende des Rohrs (W3) aufweist, so dass das Verhältnis von Länge (L) zu Breite (Ws) im Bereich von 0,33:1 bis 2:1 liegt.

8. Verfahren nach Anspruch 1, wobei der mechanische Eingriff des Endabschnitts des ersten Nitinolrohrs (10) mit der zweiten metallischen rohrförmigen Komponente eine Dehnung an den Ausbuchtungen aus Nitinol von mehr als 1,0 % bis zu 8,0 % aufweist.

9. Verfahren nach Anspruch 1, wobei die mechanische Verbindung einen Spalt (24) zwischen der Vielzahl von Ausbuchtungen (14) und der zweiten rohrförmigen Komponente (12) umfasst, wodurch eine Torsionsflexibilität von 0,1 Grad bis zu weniger als 1,0 Grad erreicht wird.

10. Verfahren nach Anspruch 1, wobei die mechanische Verbindung einen Spalt (24) zwischen der Vielzahl von Ausbuchtungen (14) und der zweiten rohrförmigen Komponente (12) umfasst, wodurch eine Torsionsflexibilität von 1,0 Grad bis 3,0 Grad erreicht wird.

## Revendications

1. Procédé de formation d'un assemblage mécanique entre un tube en nitinol et un composant tubulaire correspondant en matériau métallique autre que le nitinol comprenant :
le fait de prévoir un premier tube en nitinol (10), dans lequel ledit tube comprend une première partie d'extrémité et une pluralité de premiers lobes en saillie (14) qui s'étendent depuis ladite première partie d'extrémité ;
le fait de prévoir un deuxième composant tubulaire (12) en matériau métallique autre que le nitinol ayant une deuxième partie d'extrémité et une pluralité de deuxièmes lobes en saillie (14') qui s'étendent depuis ladite deuxième partie d'extrémité, dans lequel lesdits deuxièmes lobes en saillie (14') sont complémentaires en taille et en géométrie aux premiers lobes en saillie (14) ;
l'engagement mécanique de ladite première partie d'extrémité ayant ladite première pluralité de lobes (14) avec ladite deuxième partie d'extrémité ayant ladite deuxième pluralité de lobes (14'), dans lequel lesdits lobes s'engagent et forment un assemblage mécanique ;
dans lequel ladite pluralité de lobes (14) se trouve dans une première position sur ledit premier tube en nitinol (10),
**caractérisé en ce que** lesdits lobes en nitinol sont refroidis et lesdits lobes refroidis sont étendus jusqu'à une deuxième position et lesdits lobes étendus sont alignés avec ladite partie d'extrémité dudit deuxième composant tubulaire (12) et lesdits lobes étendus sont ensuite chauffés et reviennent dans ladite première position et forment ledit assemblage mécanique.

2. Procédé selon la revendication 1, dans lequel ladite pluralité de lobes (14) qui s'étendent depuis ladite première partie d'extrémité sur ledit tube en nitinol (10) comprend une largeur minimum initiale W1 et une longueur L, dans lequel le rapport d'aspect entre la longueur et la largeur est de 33:1 à 10:1.

3. Procédé selon la revendication 1, dans lequel la pluralité de lobes (14) qui s'étendent depuis ladite partie d'extrémité sur ledit tube en nitinol (10) comprend 2, 3, 4, 5 ou 6 lobes.

4. Procédé selon la revendication 1, dans lequel ledit tube en nitinol (10) présente un diamètre externe (OD) de 0,254 mm à 15,875 mm.

5. Procédé selon la revendication 1, dans lequel ledit tube en nitinol (10) présente une épaisseur de paroi de 0,051 mm à 1,651 mm.

6. Procédé selon la revendication 1, dans lequel le rapport entre le diamètre externe (OD) et l'épaisseur de paroi est de 5:1 à 30:1.

7. Procédé selon la revendication 1, dans lequel ledit lobe présente une longueur L et une largeur à l'extrémité du tube (W3) telles que le rapport entre la longueur (L) et la largeur (Ws) est de l'ordre de 0,33:1 à 2:1.

8. Procédé selon la revendication 1, dans lequel ledit engagement mécanique de la partie d'extrémité dudit premier tube en nitinol (10) avec ledit deuxième composant tubulaire métallique comprend une pression sur lesdits lobes en nitinol supérieure à 1%, jusqu'à 8 %.

9. Procédé selon la revendication 1, dans lequel ledit assemblage mécanique comprend un espace (24) entre la pluralité de lobes (14) et le deuxième composant tubulaire (12), afin d'obtenir une flexibilité en torsion de 0,1 degré, jusqu'à moins de 1 degré.

10. Procédé selon la revendication 1, dans lequel ledit assemblage mécanique comprend un espace (24) entre la pluralité de lobes (14) et le deuxième composant tubulaire (12), afin d'obtenir une flexibilité en torsion de 1 degré à 3 degrés.
